(19) Europäisches Patentamt
European Patent Office
Office européen des brevets

(11) **EP 3 513 625 B1**

(12) **EUROPÄISCHE PATENTSCHRIFT**

(45) Veröffentlichungstag und Bekanntmachung des Hinweises auf die Patenterteilung:
**01.07.2020 Patentblatt 2020/27**

(51) Int Cl.:
**H05B 7/18** (2006.01)    **H05B 7/00** (2006.01)
**H05B 7/144** (2006.01)

(21) Anmeldenummer: **17746431.0**

(86) Internationale Anmeldenummer:
**PCT/EP2017/068571**

(22) Anmeldetag: **24.07.2017**

(87) Internationale Veröffentlichungsnummer:
**WO 2018/050332 (22.03.2018 Gazette 2018/12)**

(54) **UMRICHTERGESPEISTER LICHTBOGENOFEN MIT KONDENSATORANORDNUNG IM SEKUNDÄRKREIS**

INVERTER-FED ARC FURNACE WITH CAPACITOR ASSEMBLY IN SECONDARY CIRCUIT

FOUR À ARC ÉLECTRIQUE ALIMENTÉ PAR ONDULEUR AVEC SYSTÈME DE CONDENSATEURS DANS LE CIRCUIT SECONDAIRE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **15.09.2016 EP 16188941**

(43) Veröffentlichungstag der Anmeldung:
**24.07.2019 Patentblatt 2019/30**

(73) Patentinhaber: **Primetals Technologies Germany GmbH**
**91052 Erlangen (DE)**

(72) Erfinder:
• **DITTMER, Björn**
**90461 Nürnberg (DE)**
• **HERGT, Martin**
**90411 Nürnberg (DE)**
• **RIEGER, Detlef**
**85598 Baldham (DE)**

(74) Vertreter: **Metals@Linz**
**Primetals Technologies Austria GmbH**
**Intellectual Property Upstream IP UP**
**Turmstraße 44**
**4031 Linz (AT)**

(56) Entgegenhaltungen:
DE-A1- 3 025 466    DE-C- 867 267
DE-C- 949 425      US-A- 3 408 447
US-B1- 6 687 284

**Beschreibung**

Die vorliegende Erfindung geht aus von einer Elektroanordnung für einen mit Wechselstrom betriebenen Lichtbogenofen,

- wobei die Elektroanordnung einen Umrichter, einen Ofentransformator, eine Anzahl von Elektroden und eine Kondensatoranordnung aufweist,
- wobei die Elektroden in einem Ofengefäß des Lichtbogenofens angeordnet sind, so dass sie ein im Ofengefäß befindliches Schmelzgut mit Lichtbögen beaufschlagen,
- wobei der Umrichter eingangsseitig mit einem eine Netzfrequenz und eine Netzspannung aufweisenden Versorgungsnetz und ausgangsseitig mit dem Ofentransformator verbunden ist,
- wobei der Ofentransformator eingangsseitig mit dem Umrichter und ausgangsseitig mit den Elektroden des Lichtbogenofens verbunden ist,
- wobei der Umrichter von einer Steuereinrichtung gesteuert wird, so dass eine von dem Umrichter an den Ofentransformator abgegebene Primärspannung eine Ofenfrequenz aufweist.

Die vorliegende Erfindung geht weiterhin aus von einem Betriebsverfahren für einen mit Wechselstrom betriebenen Lichtbogenofen,

- wobei ein Umrichter von einer Steuereinrichtung gesteuert wird, so dass der Umrichter eine eine Netzfrequenz aufweisende Netzspannung eines Versorgungsnetzes in eine eine Ofenfrequenz aufweisende Primärspannung umsetzt,
- wobei die Primärspannung einem Ofentransformator zugeführt wird, der die Primärspannung in eine Sekundärspannung transformiert,
- wobei die Sekundärspannung einer Anzahl von in einem Ofengefäß des Lichtbogenofens angeordneten Elektroden des Lichtbogenofens zugeführt wird, so dass die Elektroden ein in dem Ofengefäß befindliches Schmelzgut mit Lichtbögen beaufschlagen.

Eine derartige Elektroanordnung und das zugehörige Betriebsverfahren sind beispielsweise aus der DE 10 2008 049 610 A1 bzw. der korrespondierenden US 8 933 378 B2 bekannt. Bei der bekannten Elektroanordnung sind sekundärseitig des Ofentransformators ausschließlich die Elektroden angeordnet. Etwaige Blindleistungskompensatoren und/oder Kondensatoranordnungen sind entweder zwischen dem Versorgungsnetz und dem Umrichter oder zwischen dem Umrichter und dem Ofentransformator angeordnet.

Auch aus der WO 97/49157 A1 ist eine Elektroanordnung für einen Lichtbogenofen bekannt. Bei dieser Anordnung ist eine Kondensatoranordnung vorhanden, die - ebenso wie ein gesteuerter Blindleistungskompensator und mehrere Reihenschaltungen einer Kapazität und einer Induktivität - dem Lichtbogenofen parallel geschaltet ist. Die genannten, parallel geschalteten Komponenten sind über einen Transformator an ein Versorgungsnetz angeschlossen. Die Kapazität und die Reihenschaltungen von je einer Kapazität und einer Induktivität stellen Filterkreise dar, die auf ein ganzzahliges oder nicht ganzzahliges Vielfaches der Netzfrequenz abgestimmt sind. Über den internen Aufbau des Lichtbogenofens ist der WO 97/49157 A1 nichts zu entnehmen. Insbesondere ist der WO 97/49157 A1 nicht zu entnehmen, ob es sich bei dem Transformator der WO 97/49157 A1 um den Ofentransformator handelt.

Aus der DE 30 25 466 A1 ist ein Lichtbogenofen bekannt, der mehrere Elektroden aufweist, die über einen Transformator direkt aus einem Drehstromnetz gespeist werden. Sekundärseitig des Transformators sind Kondensatoren angeordnet, die über Schaltelemente geschaltet werden können.

Aus der DE 949 425 C ist ein Drehstrom-Lichtbogenofen bekannt, wobei die Elektroden des Lichtbogenofens über einen Transformator direkt aus einem Versorgungsnetz gespeist werden. Sekundärseitig des Transformators sind Kondensatoren angeordnet.

Aus der US 6 687 284 B1 ist ein Lichtbogenofen bekannt, der über einen Ofentransformator mit Netzfrequenz aus einem Drehstromnetz gespeist wird. Zusätzlich ist ein HF-Generator vorhanden, der dem vom Ofentransformator abgehenden Strom einen HF-Strom überlagert. Dem HF-Generator kann ein HF-Transformator nachgeordnet sein. Zwischen dem Ofentransformator und den Elektroden sind unter anderem Kondensatoren angeordnet, die in Verbindung mit der Leitungskapazität der Leitungen vom Ofentransformator zu den Elektroden bezüglich der HF-Frequenz in Resonanz betrieben werden.

Aus der DE 867 267 C ist bekannt, einer mit Drehstrom beschriebenen Elektrodenanordnung eines Lichtbogenofens zusätzlich zum Elektrodenstrom einen Initialstrom höherer Frequenz zu überlagern. Der Initialstrom wird über Kondensatoren zu den Elektroden geführt. Die Hochfrequenz-Stromquelle zur Generierung des Initialstroms wird über einen Transformator mit Energie versorgt.

Lichtbogenöfen - insbesondere Drehstrom-Lichtbogenöfen - werden zum Schmelzen von festem Einsatzmaterial (= Schmelzgut) genutzt. Hierzu wird über eine Anzahl von Graphitelektroden elektrische Energie in Form von Lichtbögen in das Ofengefäß eingebracht. Die Anzahl an Graphitelektroden korrespondiert mit der speisenden Spannung. Bei einem üblichen dreiphasigen Drehstrom-Lichtbogenofen sind somit drei Elektroden vorhanden, bei einem mit Gleichstrom gespeisten Lichtbogenofen eine einzige Elektrode. Zur Versorgung der Elektroden mit elektrischer Energie wird mit Hilfe eines Ofentransformators die Mittel- oder Hochspannung des Versorgungsnetzes (meist zwischen 10 und 40 kV, in einzelnen Fällen auch bis 100 oder 110 kV) bei Netzfrequenz (50 oder 60 Hz) in eine Niederspannung (meist mehrere 100 V, in einzelnen Fällen etwas über 1 kV, maximal 2 kV) heruntertransformiert und den Elektroden zugeführt. Die Elektroden werden nach Bedarf mechanisch nach oben und unten verfahren, um den Lichtbogen zu zünden und sodann über den Abstand zwischen Elektrode und Einsatzmaterial bzw. Schmelzgut die Lichtbogenspannung, den Strom und damit im Ergebnis die eingekoppelte Leistung einzustellen.

Die Konstruktion der stromführenden Elemente des Lichtbogenofens erfolgt unter anderem unter Berücksichtigung der auftretenden Selbst- und Gegeninduktivitäten des Hochstromsystems auf der Sekundärseite des Ofentransformators bis hin zu den Graphitelektroden. In der Regel wird versucht, eine Kurzschlussreaktanz dieser Bauteile bei Netzfrequenz im Bereich von ca. 3 Milliohm zu erreichen. In diesem Bereich sind zum einen die maximal möglichen Ströme bei betriebsmäßigem Kurzschluss im Ofengefäß begrenzt. Zum anderen wird die in dem elektromagnetischen Feld gespeicherte Energie der Induktivitäten bei einem Lichtbogenabriss in Form einer Spannungserhöhung zur Verfügung gestellt. Dies begünstigt das Wiederzünden des Lichtbogens. Beide Effekte sind vorteilhaft für die Prozessführung des Lichtbogenofens. Insbesondere begünstigen sie die elektrische Energieeinbringung.

Durch die oben beschriebenen Reaktanzen ist die Leistungsaufnahme des Lichtbogenofens durch einen hohen Blindleistungsanteil gekennzeichnet. Typische Werte für den Leistungsfaktor des Ofenzweiges liegen im Bereich von ca. 0,8. Bei einem Transformator mit einer Scheinleistung von 100 MVA und einem Wirkleistungseintrag von 83 MW ergibt sich dadurch eine Blindleistung im Bereich von rund 56 MVAr. Dadurch entstehen höhere Verluste bei der elektrischen Energieübertragung. Weiterhin muss eine entsprechend höhere Stromtragfähigkeit der elektrischen Betriebsmittel eingeplant werden. Darüber hinaus entstehen in nachteiliger Weise oftmals Netzrückwirkungen im speisenden Versorgungsnetz, insbesondere Flicker. Auch bestehen oftmals Restriktionen bezüglich des minimal zulässigen Leistungsfaktors seitens der Energieversorgung, so dass zur Einhaltung des Leistungsfaktors eine Blindleistungskompensation erforderlich ist.

Üblicherweise erfolgt der Betrieb des Lichtbogenofens mit einer hinreichend großen Induktivität im Stromkreis. Dies bewirkt, dass der Strom weit genug nacheilt. Dadurch ist im Stromnulldurchgang die Spannung bereits groß genug, um den Stromfluss aufrecht zu erhalten. Dies führt jedoch im Gegenzug dazu, dass der Lichtbogenofen nur bis zu einem bestimmten Leistungsfaktor betrieben werden kann. Es ergibt sich somit eine hohe Blindleistung. Die elektrischen Betriebsmittel können daher nicht optimal genutzt werden.

Die Vorgehensweise gemäß der DE 10 2008 049 610 A1 stellt gegenüber dieser Vorgehensweise bereits einen Fortschritt dar. Insbesondere kann der Lichtbogenofen mit einer Frequenz betrieben werden, die unabhängig von der Netzfrequenz des Versorgungsnetzes gewählt wird. Auch die Vorgehensweise gemäß der DE 10 2008 049 610 A1 ist jedoch noch verbesserungsfähig.

Die Aufgabe der vorliegenden Erfindung besteht darin, Möglichkeiten zu schaffen, mittels derer zum einen der Betrieb des Lichtbogenofens optimiert werden kann, insbesondere die Stabilität der Lichtbögen maximiert werden kann. Zum anderen sollen die Kosten für die zum Betrieb des Lichtbogenofens erforderlichen Komponenten minimiert werden.

Die Aufgabe wird durch eine Elektroanordnung mit den Merkmalen des Anspruchs 1 gelöst. Vorteilhafte Ausgestaltungen der Elektroanordnung sind Gegenstand der abhängigen Ansprüche 2 bis 5.

Erfindungsgemäß wird eine Elektroanordnung der eingangs genannten Art dadurch ausgestaltet, dass der Ofentransformator ausgangsseitig nicht nur mit den Elektroden des Lichtbogenofens, sondern auch mit der Kondensatoranordnung verbunden ist. Es wird also die Kondensatoranordnung im Gegensatz zur allgemein üblichen Vorgehensweise des Standes der Technik nicht primärseitig des Ofentransformators oder sogar noch weiter zum Versorgungsnetz hin angeordnet, sondern sekundärseitig des Ofentransformators. Weiterhin erfolgt die Ansteuerung des Umrichters durch die Steuereinrichtung derart, dass die Ofenfrequenz mindestens das Zehnfache der Netzfrequenz beträgt und/oder größer als 1 kHz ist.

Durch diese Ausgestaltung wird zum einen erreicht, dass weder zwischen dem Versorgungsnetz und dem Umrichter noch zwischen dem Umrichter und dem Ofentransformator noch ausgangsseitig des Ofentransformators ein gesteuerter Blindleistungskompensator vorhanden sein muss. Es ist also keine weitergehende Blindleistungskompensation erforderlich. Vielmehr ist es möglich, die Speisung durch den Umrichter derart einzustellen, dass der aus den Elektroden des Lichtbogenofens einerseits und der Kondensatoranordnung andererseits gebildete elektrische Schwingkreis zur Resonanz angeregt wird.

Die Ofenfrequenz kann insbesondere so hoch gewählt werden, dass sie weit oberhalb der Netzfrequenz von üblicherweise 50 oder 60 Hz liegt. Aus diesem Grund ist vorzugsweise der Ofentransformator als Mittelfrequenztransformator ausgebildet.

Die Kondensatoranordnung kann nach Bedarf ausgebildet sein. Insbesondere können Kondensatoren der Kondensatoranordnung parallel und/oder in Serie zu den Elektroden des Lichtbogenofens geschaltet sein.

Die Aufgabe wird weiterhin durch ein Betriebsverfahren mit den Merkmalen des Anspruchs 6 gelöst. Vorteilhafte Ausgestaltungen des Betriebsverfahrens sind Gegenstand der abhängigen Ansprüche 7 bis 10.

Erfindungsgemäß wird die Sekundärspannung nicht nur den Elektroden, sondern weiterhin auch einer ausgangsseitig des Ofentransformators angeordneten Kondensatoranordnung zugeführt. Weiterhin beträgt die Ofenfrequenz mindestens das Zehnfache der Netzfrequenz und/oder ist größer als 1 kHz.

Analog zu der Elektroanordnung wird dadurch ermöglicht, dass weder zwischen dem Versorgungsnetz und dem Umrichter noch zwischen dem Umrichter und dem Ofentransformator noch ausgangsseitig des Ofentransformators eine gesteuerte Blindleistungskompensation erfolgt.

Vorzugsweise ist die Ofenfrequenz nicht nur erheblich größer als die Netzfrequenz, sondern sogar größer als 3 kHz. Beispielsweise kann die Ofenfrequenz zwischen 5 und 15 kHz liegen. Die Ofenfrequenz kann aber auch noch höhere Werte von beispielsweise bis zu 20 kHz, bis zu 30 kHz, bis zu 50 kHz und in seltenen Fällen auch noch höhere Werte von bis zu 100 kHz aufweisen. Die Ofenfrequenz ist hierbei die Grundfrequenz, mit welcher die Elektroden gespeist werden. Die Ofenfrequenz ist also nicht eine Oberschwingung.

Die Ofenfrequenz kann insbesondere derart gewählt werden, dass sie im Resonanzbereich eines durch die Induktivitäten der Elektroden des Lichtbogenofens und die Kondensatoranordnung gebildeten elektrischen Schwingkreises liegt.

Kondensatoren der Kondensatoranordnung können, wie bereits erwähnt, nach Bedarf parallel und/oder in Serie zu den Elektroden des Lichtbogenofens geschaltet sein.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die in Verbindung mit den Zeichnungen näher erläutert werden. Hierbei zeigen in schematischer Darstellung:

FIG 1    eine Elektroanordnung und einen Lichtbogenofen,
FIG 2    ein Frequenzdiagramm,
FIG 3    eine mögliche Kondensatoranordnung und
FIG 4    eine weitere mögliche Kondensatoranordnung.

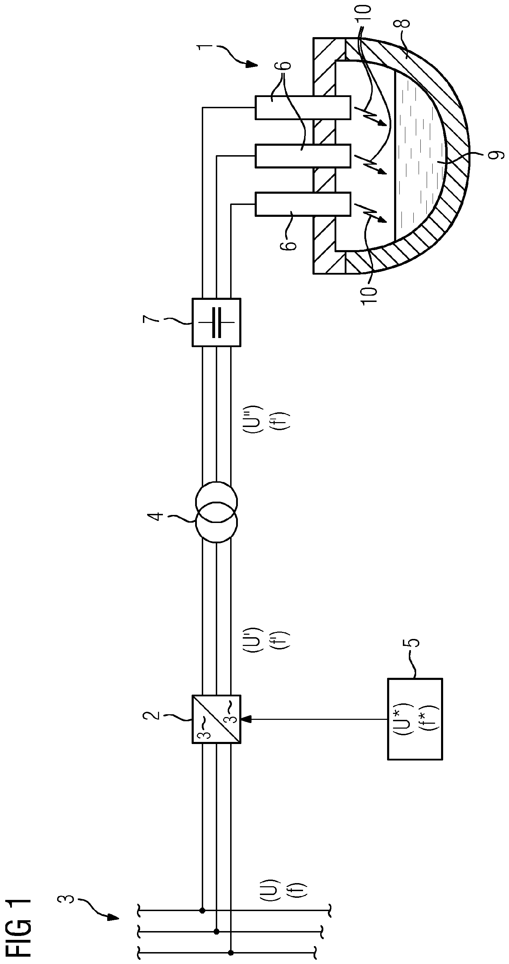

Gemäß FIG 1 weist eine Elektroanordnung für einen Lichtbogenofen 1 einen Umrichter 2 auf. Der Umrichter 2 ist eingangsseitig mit einem Versorgungsnetz 3 und ausgangsseitig mit einem Ofentransformator 4 verbunden. Der Umrichter 2 setzt eine Netzspannung U des Versorgungsnetzes 3 in eine Primärspannung U' um. Das Versorgungsnetz 3 ist in der Regel ein Drehstromnetz. Die Netzspannung U ist in der Regel größer als 10 kV. Beispielsweise kann sie bei 30 oder 33 kV liegen. Der Umrichter 2 kann beispielsweise als Zwischenkreisumrichter ausgebildet sein. Eine mögliche Ausgestaltung des Umrichters 2 kann insbesondere auf die gleiche Art und Weise erfolgen, wie es in der DE 10 2008 049 610 A1 erläutert ist. Es sind jedoch auch andere Ausgestaltungen des Umrichters 2 möglich.

Die Netzspannung U weist eine Netzfrequenz f von üblicherweise 50 oder 60 Hz auf. Die Primärspannung U' ist kleiner als die Netzspannung U. Oftmals ist die Primärspannung U' jedoch nur geringfügig kleiner als die Netzspannung U. Beispielsweise kann sie im Bereich zwischen 70 % und 100 % der Netzspannung U liegen. Die Primärspannung U' weist jedoch eine Ofenfrequenz f' auf, die unabhängig von der Netzfrequenz f gewählt werden kann. Insbesondere kann die Ofenfrequenz f' erheblich größer als die Netzfrequenz f sein, beispielsweise mindestens zehnmal so groß. Die Ofenfrequenz f' kann sogar größer als 1 kHz sein, insbesondere größer als 3 kHz. Bevorzugte Bereiche der Ofenfrequenz f' liegen zwischen 5 und 15 kHz. Es sind jedoch auch größere Frequenzen bis zu 100 kHz möglich. Für die Primärspannung U' kann von einer Steuereinrichtung 5 für den Lichtbogenofen 1 ein entsprechender Sollwert U* ermittelt werden. Der Sollwert f* für die Ofenfrequenz f' kann fest vorgegeben sein, der Steuereinrichtung 5 von außen vorgegeben werden oder von der Steuereinrichtung 5 ermittelt werden. Basierend auf den Sollwerten U*, f* kann von der Steuereinrichtung 5 eine entsprechende Ansteuerung des Umrichters 2 vorgenommen werden. Es ist somit möglich, die Primärspannung U' als Regelgröße für den Lichtbogenofen 1 zu verwenden.

Aufgrund der hohen Ofenfrequenz f' ist der Ofentransformator 4 vorzugsweise als Mittelfrequenztransformator ausgebildet.

Die Primärspannung U' wird eingangsseitig dem Ofentransformator 4 zugeführt. Der Ofentransformator 4 transformiert die Primärspannung U' in eine Sekundärspannung U". Die Sekundärspannung U" ist kleiner als die Primärspannung U'. Meist liegt die Sekundärspannung U" im Bereich von mehreren 100 V, manchmal geringfügig darüber. In Einzelfällen sind Werte bis etwas über 1 kV, maximal jedoch 2 kV möglich. Unabhängig vom konkreten Wert der Sekundärspannung U" weist jedoch auch die Sekundärspannung U" die Ofenfrequenz f' auf.

Ausgangsseitig ist der Ofentransformator 4 mit einer Anzahl von Elektroden 6 des Lichtbogenofens 1 und einer Kondensatoranordnung 7 verbunden. In dem seltenen Fall eines Wechselstrom-Lichtbogenofens sind entweder zwei Elektroden 6 oder eine einzige Elektrode 6 und eine Bodenanode vorhanden. In dem üblichen Fall eines Drehstrom-Lichtbogenofens liegt die Anzahl bei mindestens drei, in der Regel bei exakt drei. Unabhängig von der Anzahl an Elektroden 6 wird der Lichtbogenofen 1 jedoch mit Wechselstrom betrieben. Die Elektroden 6 sind in einem Ofengefäß 8 des Lichtbogenofens 1 angeordnet. Die Elektroden 6 beaufschlagen ein im Ofengefäß 8 befindliches Schmelzgut 9 mit Lichtbögen 10. Die Sekundärspannung U" wird sowohl den Elektroden 6 als auch der Kondensatoranordnung 7 zugeführt.

In aller Regel erfolgt die Energieversorgung der Elektroden 6 ausschließlich über den Umrichter 2 und den Ofentransformator 4. Es erfolgt also keine anderweitige Beaufschlagung der Elektroden 6 mit anderen Spannungen und Strömen mit gegebenenfalls anderen Frequenzen. Selbst wenn im Einzelfall eine zusätzliche anderweitige Beaufschlagung der Elektroden 6 erfolgen sollte, stellt diese zusätzliche Beaufschlagung nur einen kleinen Bruchteil (weit unter 10 %, meist sogar maximal 1 %) der den Elektroden 6 zugeführten elektrischen Energie dar. Auch in diesem Fall wird also den Elektroden 6 über den Umrichter 2 und den Ofentransformator 4 der "Löwenanteil" an Energie zugeführt.

Zusätzlich zu der Kondensatoranordnung 7 ist keine weitere Blindleistungskompensation erforderlich. Es ist somit vorzugsweise weder zwischen dem Versorgungsnetz 3 und dem Umrichter 2 noch zwischen dem Umrichter 2 und dem Ofentransformator 4 noch ausgangsseitig des Ofentransformators 4 ein gesteuerter Blindleistungskompensator vorhanden. Dies gilt insbesondere für einen TCR (= thyristor controlled reactor). Oftmals ist auch kein ungesteuerter Filterkreis vorhanden. Wenn dennoch ein ungesteuerter Filterkreis vorhanden sein sollte, ist dieser vorzugsweise vor dem Umrichter 2 angeordnet und auf eine Oberschwingung der Netzfrequenz f ausgelegt.

Die Elektroden 6 des Lichtbogenofens 1 und die Kondensatoranordnung 7 bilden aufgrund der Induktivitäten L der Elektroden 6 und der Kapazität C der Kondensatoranordnung 7 einen elektrischen Schwingkreis. Der elektrische Schwingkreis weist eine Resonanzfrequenz fR auf, die durch die Beziehung

$$fR = \frac{1}{2\pi\sqrt{LC}} \tag{1}$$

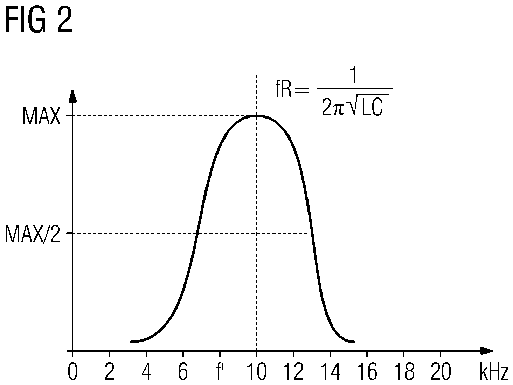

gegeben ist. Die Ofenfrequenz f' ist, wie bereits erwähnt, erheblich größer als die Netzfrequenz f. Entsprechend der Darstellung in FIG 2 kann die Ofenfrequenz f' im Resonanzbereich des elektrischen Schwingkreises liegen. Insbesondere kann die Beziehung

$$\alpha \leq f' / fR < \beta \tag{2}$$

gelten. $\alpha$ ist ein Wert von mindestens 0,3. Meist liegt $\alpha$ im Bereich zwischen 0,5 und 0,9. Insbesondere kann $\alpha$ bei etwa 0,7 liegen. $\beta$ ist ein Wert von maximal 3,3. Meist liegt $\beta$ zwischen 1,1 und 2,0. Insbesondere kann $\beta$ bei etwa 1,4 liegen. Weiterhin kann $\beta$ (zumindest auf ca. 10 % genau) der Kehrwert von $\alpha$ sein.

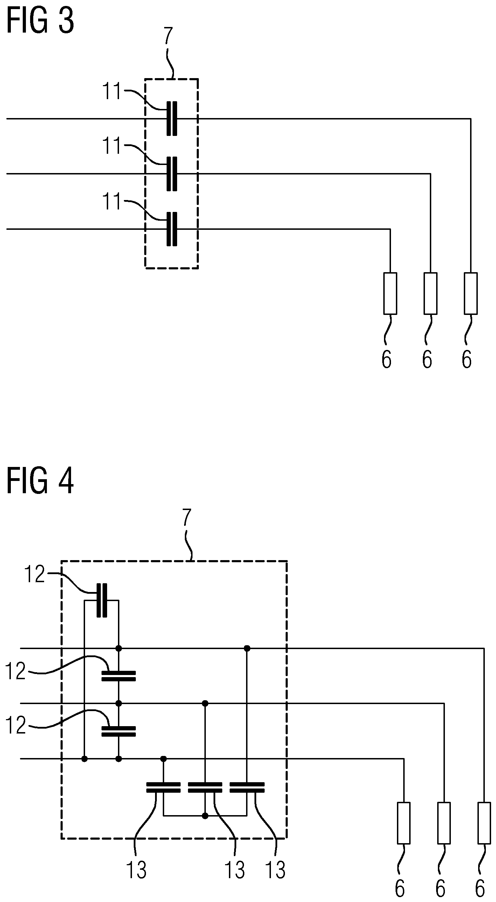

Die genaue Ausgestaltung der Kondensatoranordnung 7 kann nach Bedarf sein. Beispielsweise kann die Kondensatoranordnung 7 entsprechend der Darstellung in FIG 3 Kondensatoren 11 aufweisen, welche in den Leitungen zu den Elektroden 6 selbst angeordnet sind, also in Serie zu den Elektroden 6 des Lichtbogenofens 1 geschaltet sind. Alternativ kann die Kondensatoranordnung 7 entsprechend der Darstellung in FIG 4 Kondensatoren 12, 13 aufweisen, mittels derer die Leitungen zu den Elektroden 6 miteinander und/oder mit einem gemeinsamen Sternpunkt verbunden sind. Der Sternpunkt kann, nicht aber muss, geerdet sein. In diesem Fall sind die Kondensatoren 12, 13 parallel zu den Elektroden 6 des Lichtbogenofens 1 geschaltet. Auch Kombinationen derartiger Anordnungen sind möglich.

Die vorliegende Erfindung weist viele Vorteile auf. Insbesondere kann aufgrund der hohen Ofenfrequenz f' die Stabilität des Lichtbogens über einen erweiterten Arbeitsbereich sichergestellt werden. Auch die Wahrscheinlichkeit von internen Überschlägen aufgrund von unkontrollierten Überspannungen wird minimiert. Weiterhin können die eingesetzten elektrischen Komponenten sowohl bezüglich ihrer Baugröße als auch bezüglich ihrer elektrischen Nominalwerte (Kapazität und Induktivität) kleiner dimensioniert werden. Die sekundärseitig des Ofentransformators 4 angeordnete Kondensatoranordnung 7 ermöglicht es, den Leistungsfaktor auf Werte von 0,95 und mehr, im Idealfall von 0,98 und mehr, einzustellen. Die hohe Ofenfrequenz f' ermöglicht weiterhin, den Sollwert U* für die Primärspannung U' sehr schnell - im Millisekundenbereich - nachzuführen und die Primärspannung U' in diesem Zeitbereich nachzuregeln. Ein Stufenschalter an der Primärseite des Ofentransformators 4 ist dadurch nicht mehr erforderlich. Die Primärspannung U' kann weiterhin variiert werden. Flicker wird reduziert. Auch die Baugröße des Ofentransformators 4 kann reduziert werden. Der Energieverbrauch kann reduziert werden. Auch Wartungskosten sind reduziert.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

Bezugszeichenliste

| | |
|---|---|
| 1 | Lichtbogenofen |
| 2 | Umrichter |
| 3 | Versorgungsnetz |
| 4 | Ofentransformator |
| 5 | Steuereinrichtung |
| 6 | Elektroden |
| 7 | Kondensatoranordnung |
| 8 | Ofengefäß |
| 9 | Schmelzgut |
| 10 | Lichtbögen |
| 11 bis 13 | Kondensatoren |

| | |
|---|---|
| C | Kapazität |
| f | Netzfrequenz |
| f' | Ofenfrequenz |
| fR | Resonanzfrequenz |
| f* | Sollwert für Ofenfrequenz |
| L | Induktivität |
| U | Netzspannung |
| U' | Primärspannung |
| U" | Sekundärspannung |
| U* | Sollwert für Primärspannung |

$\alpha, \beta$    Werte

**Patentansprüche**

1. Elektroanordnung für einen mit Wechselstrom betriebenen Lichtbogenofen (1),

    - wobei die Elektroanordnung einen Umrichter (2), einen Ofentransformator (4), eine Anzahl von Elektroden (6) und eine Kondensatoranordnung (7) aufweist,
    - wobei die Elektroden (6) in einem Ofengefäß (8) des Lichtbogenofens (1) angeordnet sind, so dass sie ein im Ofengefäß (8) befindliches Schmelzgut (9) mit Lichtbögen (10) beaufschlagen,
    - wobei der Umrichter (2) eingangsseitig mit einem eine Netzfrequenz (f) und eine Netzspannung (U) aufweisenden Versorgungsnetz (3)

    **dadurch gekennzeichnet, dass**
    der Umrichter (2) ausgangsseitig mit dem Ofentransformator (4) verbunden ist,

    - wobei der Ofentransformator (4) eine dem Ofentransformator (4) vom Umrichter (2) zugeführte Primärspannung (U') in eine den Elektroden (6) zugeführte Sekundärspannung (U") von maximal 2 kV herunter transformiert,
    - wobei der Ofentransformator (4) eingangsseitig mit dem Umrichter (2) und ausgangsseitig mit den Elektroden (6) des Lichtbogenofens (1) und der Kondensatoranordnung (7) verbunden ist,
    - wobei der Umrichter (2) von einer Steuereinrichtung (5) gesteuert wird, so dass eine von dem Umrichter (2) an den Ofentransformator (4) abgegebene Primärspannung (U') eine Ofenfrequenz (f') aufweist, die mindestens das Zehnfache der Netzfrequenz (f) beträgt und/oder größer als 1 kHz ist,
    - wobei die Ofenfrequenz (f') die Grundfrequenz ist, mit welcher die Elektroden (6) gespeist werden.

2. Elektroanordnung nach Anspruch 1,
    **dadurch gekennzeichnet,**
    **dass** weder zwischen dem Versorgungsnetz (3) und dem Umrichter (2) noch zwischen dem Umrichter (2) und dem Ofentransformator (4) noch ausgangsseitig des Ofentransformators (4) ein gesteuerter Blindleistungskompensator vorhanden ist.

**3.** Elektroanordnung nach Anspruch 1 oder 2,
**dadurch gekennzeichnet,**
**dass** der Ofentransformator (4) als Mittelfrequenztransformator ausgebildet ist.

**4.** Elektroanordnung nach Anspruch 1, 2 oder 3,
**dadurch gekennzeichnet,**
**dass** die Kondensatoranordnung (7) Kondensatoren (11 bis 13) aufweist, die parallel und/oder in Serie zu den Elektroden (6) des Lichtbogenofens (1) geschaltet ist.

**5.** Elektroanordnung nach einem der obigen Ansprüche,
**dadurch gekennzeichnet,**
**dass** die Ofenfrequenz (f') im Resonanzbereich eines durch die Induktivitäten (L) der Elektroden (6) des Lichtbogenofens (1) und die Kondensatoranordnung (7) gebildeten elektrischen Schwingkreises liegt.

**6.** Betriebsverfahren einer Elektroanordnung für einen mit Wechselstrom betriebenen Lichtbogenofen (1),

- wobei ein Umrichter (2) von einer Steuereinrichtung (5) gesteuert wird, so dass der Umrichter (2) eine eine Netzfrequenz (f) aufweisende Netzspannung (U) eines Versorgungsnetzes (3) in eine eine Ofenfrequenz (f') aufweisende Primärspannung (U') umsetzt,
- wobei die Ofenfrequenz (f') mindestens das Zehnfache der Netzfrequenz (f) beträgt und/oder größer als 1 kHz ist,

**dadurch gekennzeichnet, dass**
die Primärspannung (U') einem Ofentransformator (4) zugeführt wird, der die Primärspannung (U') in eine Sekundärspannung (U") von maximal 2 kV herunter transformiert,

- wobei die Sekundärspannung (U") einer Anzahl von in einem Ofengefäß (8) des Lichtbogenofens (1) angeordneten Elektroden (6) des Lichtbogenofens (1) zugeführt wird, so dass die Elektroden (6) ein in dem Ofengefäß (8) befindliches Schmelzgut (9) mit Lichtbögen (10) beaufschlagen,
- wobei die Sekundärspannung (U") weiterhin einer ausgangsseitig des Ofentransformators (4) angeordneten Kondensatoranordnung (7) zugeführt wird,
- wobei die Ofenfrequenz (f') die Grundfrequenz ist, mit welcher die Elektroden (6) gespeist werden.

**7.** Betriebsverfahren nach Anspruch 6,
**dadurch gekennzeichnet,**
**dass** weder zwischen dem Versorgungsnetz (3) und dem Umrichter (2) noch zwischen dem Umrichter (2) und dem Ofentransformator (4) noch ausgangsseitig des Ofentransformators (4) eine gesteuerte Blindleistungskompensation erfolgt.

**8.** Betriebsverfahren nach Anspruch 6 oder 7,
**dadurch gekennzeichnet,**
**dass** die Ofenfrequenz (f') größer als 3 kHz ist.

**9.** Betriebsverfahren nach einem der Ansprüche 5 bis 8,
**dadurch gekennzeichnet,**
**dass** die Ofenfrequenz (f') im Resonanzbereich eines durch die Induktivitäten (L) der Elektroden (6) des Lichtbogenofens (1) und die Kondensatoranordnung (7) gebildeten elektrischen Schwingkreises liegt.

**10.** Betriebsverfahren nach einem der Ansprüche 5 bis 9,
**dadurch gekennzeichnet,**
**dass** die Kondensatoranordnung (7) Kondensatoren (11 bis 13) aufweist, die parallel und/oder in Serie zu den Elektroden (6) des Lichtbogenofens (1) geschaltet ist.

**Claims**

**1.** Electrical arrangement for an electric arc furnace (1) operated with alternating current,

- wherein the electrical arrangement comprises a convertor (2), a furnace transformer (4), a number of electrodes (6) and a capacitor arrangement (7),
- wherein the electrodes (6) are arranged in a furnace vessel (8) of the electric arc furnace (1), such that they apply electric arcs (10) to a melt material (9) situated in the furnace vessel (8),
- wherein, on the input side, the convertor (2) to a supply network (3) having a network frequency (f) and a network frequency (U),

**characterized in that**
on the output side, the convertor (2) is connected to the furnace transformer (4),

- wherein the furnace transformer (4) steps down a primary voltage (U') fed to the furnace transformer (4) by the convertor (2) into a secondary voltage (U") of a maximum of 2 kV, said secondary voltage being fed to the electrodes (6),
- wherein the furnace transformer (4) is connected to the convertor (2) on the input side and to the electrodes (6) of the electric arc furnace (1) and the capacitor arrangement (7) on the output side,
- wherein the convertor (2) is controlled by a control device (5), such that a primary voltage (U') output to the furnace transformer (4) by the convertor (2) has a furnace frequency (f') which is at least ten times the network frequency (f) and/or is greater than 1 kHz,
- wherein the furnace frequency (f') is the fundamental frequency at which the electrodes (6) are supplied.

2. Electrical arrangement according to Claim 1,
**characterized**
**in that** a controlled power factor corrector is not present either between the supply network (3) and the convertor (2), or between the convertor (2) and the furnace transformer (4), or on the output side of the furnace transformer (4).

3. Electrical arrangement according to Claim 1 or 2,
**characterized**
**in that** the furnace transformer (4) is embodied as a medium-frequency transformer.

4. Electrical arrangement according to Claim 1, 2 or 3,
**characterized**
**in that** the capacitor arrangement (7) comprises capacitors (11 to 13) connected in parallel and/or in series with the electrodes (6) of the electric arc furnace (1).

5. Electrical arrangement according to any of the preceding claims,
**characterized**
**in that** the furnace frequency (f') lies in the resonance range of an electrical resonant circuit formed by the inductances (L) of the electrodes (6) of the electric arc furnace (1) and the capacitor arrangement (7).

6. Operating method for an electrical arrangement for an electric arc furnace(1) operated with alternating current,

- wherein a convertor (2) is controlled by a control device (5), such that the convertor (2) converts a network voltage (U) of a supply network (3), said network voltage having a network frequency (f) into a primary voltage (U') having a furnace frequency (f'),
- wherein the furnace frequency (f') is at least ten times the network frequency (f) and/or is greater than 1 kHz,

**characterized in that**
the primary voltage (U') is fed to a furnace transformer (4), which steps down the primary voltage (U') into a secondary voltage (U") of a maximum of 2 kV,

- wherein the secondary voltage (U") is fed to a number of electrodes (6) of the electric arc furnace (1) that are arranged in a furnace vessel (8) of the electric arc furnace (1), such that the electrodes (6) apply electric arcs (10) to a melt material (9) situated in the furnace vessel (8),
- wherein the secondary voltage (U") is furthermore fed to a capacitor arrangement (7) arranged on the output side of the furnace transformer (4),
- wherein the furnace frequency (f') is the fundamental frequency at which the electrodes (6) are supplied.

7. Operating method according to Claim 6,

**characterized**

**in that** a controlled power factor correction is not effected either between the supply network (3) and the convertor (2), or between the convertor (2) and the furnace transformer (4), or on the output side of the furnace transformer (4).

8. Operating method according to Claim 6 or 7,
**characterized**
**in that** the furnace frequency (f') is greater than 3 kHz.

9. Operating method according to any of Claims 5 to 8,
**characterized**
**in that** the furnace frequency (f') lies in the resonance range of an electrical resonant circuit formed by the inductances (L) of the electrodes (6) of the electric arc furnace (1) and the capacitor arrangement (7).

10. Operating method according to any of Claims 5 to 9,
**characterized**
**in that** the capacitor arrangement (7) comprises capacitors (11 to 13) connected in parallel and/or in series with the electrodes (6) of the electric arc furnace (1).

**Revendications**

1. Arrangement électrique pour un four à arc électrique (1) alimenté en courant alternatif,

   - dans lequel l'arrangement électrique comprend un convertisseur (2), un transformateur de four (4), un nombre d'électrodes (6) et un système de condensateurs (7),
   - dans lequel les électrodes (6) sont disposées dans une carcasse de four (8) du four à arc électrique (1), de sorte qu'une matière à fondre (9) présente dans la carcasse de four (8) est exposée à des arcs électriques (10) issus des électrodes,
   - dans lequel le convertisseur (2) est relié, côté entrée, à un réseau d'alimentation (3) présentant une fréquence de réseau (f) et une tension de réseau (U),

   **caractérisé en ce que** le convertisseur (2) est relié, côté sortie, au transformateur de four (4),

   - dans lequel le transformateur de four (4) transforme, en l'abaissant, une tension primaire (U') fournie au transformateur de four (4) par le convertisseur (2) en une tension secondaire (U") de 2 kV maximum fournie aux électrodes (6),
   - dans lequel le transformateur de four (4) est relié, côté entrée, au convertisseur (2) et, côté sortie, aux électrodes (6) du four à arc électrique (1) et au système de condensateurs (7),
   - dans lequel le convertisseur (2) est commandé par un dispositif de commande (5), de sorte qu'une tension primaire (U') délivrée au transformateur de four (4) par le convertisseur (2) présente une fréquence de four (f') qui est égale à au moins dix fois la fréquence de réseau (f) et/ou est supérieure à 1 kHz,
   - dans lequel la fréquence de four (f') est la fréquence fondamentale qui alimente les électrodes (6).

2. Arrangement électrique selon la revendication 1,
   **caractérisé en ce qu'**il n'existe aucun compensateur de puissance réactive commandé, que ce soit entre le réseau d'alimentation (3) et le convertisseur (2), entre le convertisseur (2) et le transformateur de four (4), ou sur le côté de sortie du transformateur de four (4).

3. Arrangement électrique selon la revendication 1 ou 2,
   **caractérisé en ce que** le transformateur de four (4) est conçu en tant que transformateur moyenne fréquence.

4. Arrangement électrique selon la revendication 1, 2 ou 3,
   **caractérisé en ce que** le système de condensateurs (7) comprend des condensateurs (11 à 13) qui sont montés en parallèle et/ou en série avec les électrodes (6) du four à arc électrique (1).

5. Arrangement électrique selon l'une des revendications précédentes,
   **caractérisé en ce que** la fréquence de four (f') se situe dans le domaine de résonance d'un circuit oscillant électrique formé par les inductances (L) des électrodes (6) du four à arc électrique (1) et le système de condensateurs (7).

**6.** Procédé de fonctionnement d'un arrangement électrique pour un four à arc électrique (1) alimenté en courant alternatif

- dans lequel un convertisseur (2) est commandé par un dispositif de commande (5), de sorte que le convertisseur (2) convertit une tension de réseau (U) présentant une fréquence de réseau (f) d'un réseau d'alimentation (3) en une tension primaire (U') présentant une fréquence de four (f'),
- dans lequel la fréquence de four (f') est égale à au moins dix fois la fréquence de réseau (f) et/ou est supérieure à 1 kHz,

**caractérisé en ce que**
la tension primaire (U') est fournie à un transformateur de four (4) qui transforme, en l'abaissant, la tension primaire (U') en une tension secondaire (U") de 2 kV maximum,

- dans lequel la tension secondaire (U") est fournie à un nombre d'électrodes (6) du four à arc électrique (1) disposées dans une carcasse de four (8) du four à arc électrique (1), de sorte qu'une matière à fondre (9) présente dans la carcasse de four (8) est exposée à des arcs électriques (10) issus des électrodes (6),
- dans lequel la tension secondaire (U") est ensuite fournie à un système de condensateurs (7) situé sur le côté de sortie du transformateur de four (4),
- dans lequel la fréquence de four (f') est la fréquence fondamentale qui alimente les électrodes (6).

**7.** Procédé de fonctionnement selon la revendication 6,
**caractérisé en ce qu'**aucune compensation de puissance réactive commandée n'a lieu, que ce soit entre le réseau d'alimentation (3) et le convertisseur (2), entre le convertisseur (2) et le transformateur de four (4), ou sur le côté de sortie du transformateur de four (4).

**8.** Procédé de fonctionnement selon la revendication 6 ou 7, **caractérisé en ce que** la fréquence de four (f') est supérieure à 3 kHz.

**9.** Procédé de fonctionnement selon l'une des revendications 5 à 8,
**caractérisé en ce que** la fréquence de four (f') se situe dans le domaine de résonance d'un circuit oscillant électrique formé par les inductances (L) des électrodes (6) du four à arc électrique (1) et le système de condensateurs (7).

**10.** Procédé de fonctionnement selon l'une des revendications 5 à 9,
**caractérisé en ce que** le système de condensateurs (7) comprend des condensateurs (11 à 13) qui sont montés en parallèle et/ou en série avec les électrodes (6) du four à arc électrique (1).

FIG 1

EP 3 513 625 B1

FIG 2

$$fR = \frac{1}{2\pi\sqrt{LC}}$$

FIG 3

FIG 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102008049610 A1
- US 8933378 B2
- WO 9749157 A1
- DE 3025466 A1
- DE 949425 C
- US 6687284 B1
- DE 867267 C